# EUROPEAN PATENT SPECIFICATION

(11) **EP 0 771 014 B1**
(45) Date of publication and mention of the grant of the patent: **31.03.2004**
(21) Application number: 96116855.6
(22) Date of filing: 21.10.1996
(51) Int. Cl.: H01G 2/18

(54) **Capacitor with overpressure protection**
Elektrischer Kondensator mit Überdruckschutz
Condensateur avec protection contre la surpression

(30) Priority: 24.10.1995 IT BO950505
(43) Date of publication of application: 02.05.1997
(73) Proprietor: ITALFARAD S.p.A., 40061 Minerbio (Province of Bologna) (IT)
(72) Inventor: Marino, Paolo, 40055 Castenaso, Bologna (IT)
(74) Representative: Modiano, Guido, Dr.-Ing.

(56) References cited:
- GB-A- 2 217 109
- US-A- 4 754 361

## Description

The present invention relates to an electric capacitor made of self-healing metallized plastic film, provided with an overpressure-controlled explosion-preventing device.

In the current state of the art, conventional capacitors have an explosion-preventing device and prevent the explosion of the capacitor when, as a consequence of a fault, gas develops in the capacitive element thus causing a gradual increase in pressure inside the casing.

If this pressure increase were not halted promptly, the capacitor would explode, causing possible damage to nearby people and equipment.

Currently known explosion-preventing devices are generally based on the concept of interrupting the internal electric circuit of the capacitor when the pressure in the casing reaches values above which an explosion may occur.

Conventional explosion-preventing devices are substantially of two kinds, depending on the material of which the outer casing is made.

A first type has a metal casing in which the upper part is shaped like a bellows that elongates due to internal pressure, moving the cover upwards, which thus applies a mechanical traction to an internal electrical connection until it breaks. A second type has a plastic casing in which a part of the cover is deformable and, through the action of the internal pressure, can move outwards with effects that are similar to those of the above metallic type.

In both known types, the electrical connection can be interrupted either by breakage of the conducting leads in a point that has been appropriately weakened by a previous mechanical operation, or by fracture and/or separation of the spot weld of the conducting wires on the heads of the capacitive element.

In both solutions, however, it has been observed that the mechanical resistance to fracture and/or separation of the weld or to the breakage of the wire in the pre-weakened point has values that vary considerably from one capacitor to the next, and therefore the necessary requirement of reliability is not provided, since the wire and/or weld, before separating and/or breaking, can undergo deformations that thwart the operation of the explosion-preventing device. US-A-4 754 361 discloses an explosion-preventing device for a capacitor based on an intermediate soft interspace of gas transpiring foamed material, a cap connected to the casing with an over-pressure deflecting portion which retain a plurality of longitudinally extending electric connection terminals. The electric connection teminals being engaged transversely towards a diaphragm on corresponding terminals realizing contact without welding.

A principal aim of the present invention is therefore to obviate the above drawbacks.

This aim is achieved with a capacitor having an overpressure-controlled explosion-preventing device, composed of a casing, in which a capacitive element made of self-healing metallized plastic film is accommodated, said capacitive element having two opposite heads whereon two leads are welded, and of a cover made of plastics that contains an explosion-preventing device and comprises a central body movable outwards when overpressure occurs in said casing, characterized in that at least one flexible spring-loaded contact of the "double quick coupling" type, made of conducting metal, is accommodated in said movable central body and has a terminal that is adapted to hermetically receive a lead for connection to the power supply system inserted from the outside of the casing but not to allow its extraction, and a contact terminal towards the inside of the casing, which is adapted to receive a lead for connection to the capacitive element and to allow its extraction until electrical disconnection is achieved in case of overpressure.

Further characteristics and advantages of the present invention will become apparent from the following detailed description of some embodiments thereof, with reference to the accompanying drawings, wherein:
figure 1 is a longitudinal sectional view of an explosion-preventing capacitor in the normal operating position;
figure 1a is a view of the capacitor of figure 1 in the disconnected position;
figures 1b and 1c are enlarged-scale detail views of the capacitor;
figure 2 is a longitudinal sectional view of a second embodiment of an explosion-preventing capacitor in the normal operating position;
figure 2a is a view of the capacitor of figure 2 in the disconnected position;
figures 3, 4, 5, 6, and 7 are views of further different embodiments.

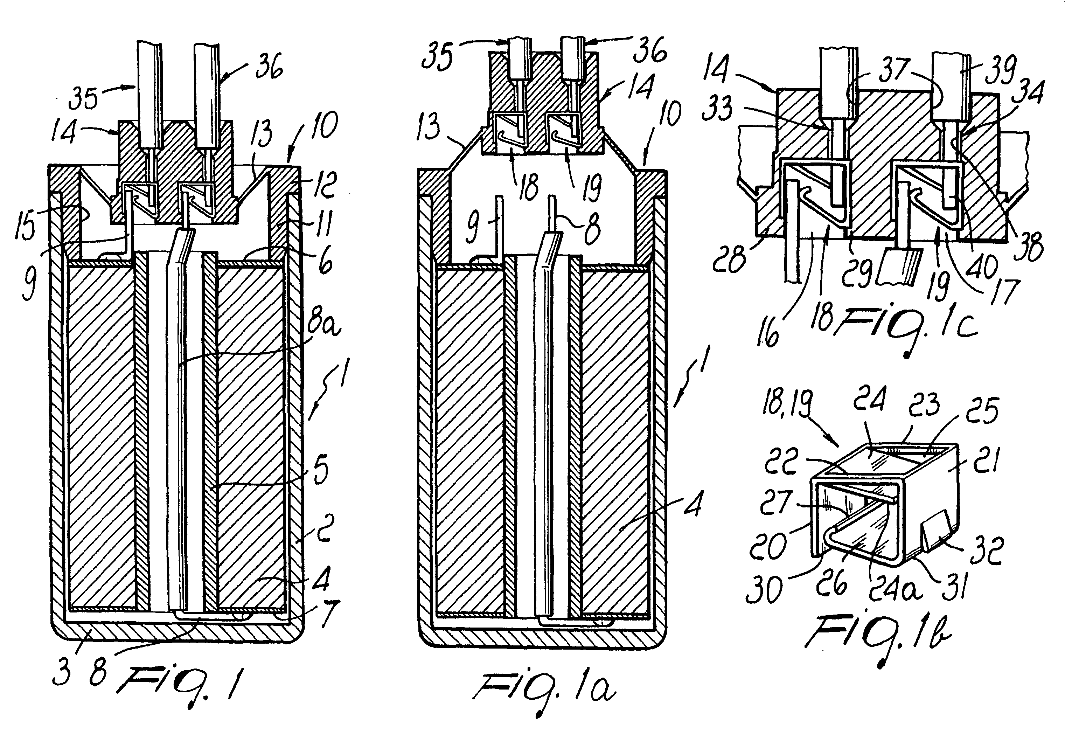

With reference to figures 1 and 1a, the explosion-preventing capacitor comprises a cylindrical casing 1 composed of a cylindrical wall 2 and of a base 3. A cylindrical capacitive element 4, made of metallized plastic film, is inserted in the casing 1 and is wrapped around on a spool 5. The plates of the capacitive element 4 are connected to two heads 6 and 7 made of a conducting material that covers the opposite faces of the capacitive element 4.

A lead 8 is connected to the lower head 7, is protected by a sheath 8a, passes axially through the spool 5, and protrudes from the upper head 6. A lead 9 is welded to the upper head 6.

The capacitive element 4 is retained inside the casing 1 by a cover 10 that comprises a ring 11 that is inserted and hermetically welded so that a collar 12 thereof abuts against the rim of the wall 2.

A central body 14 is coupled to the collar 12 by means of a flexible conical diaphragm 13. The central body 14, the diaphragm 13, and the collar 12 are made monolithically of plastics, so that when the cover 10 is applied to the casing 1 a space 15 remains that is closed hermetically with respect to the outside.

Two seats 16 and 17 (see figure 1c) are formed in the central body 14 and are open towards the head 6; two identical respective spring-loaded contacts 18 and 19, of the double quick-coupling type, are inserted in said seats. Each one of the contacts 18 and 19, one whereof is shown in enlarged scale in figure 1c, is obtained from a rectangular lamina of conducting metal, which is folded up so to form two parallel portions 20 and 21 that are joined to each other by two bridges 22 and 23, between which a tab 24 runs that is formed in practice by blanking the lamina; the tab has a sharp front edge 24a.

The tab 24 is folded inwards and forms, together with the portion 21, a connecting terminal for a wire, meant to connect the capacitor to the power supply system, which is adapted to be inserted in the terminal through the opening 25 delimited by the bridges 22 and 23.

A second tab 26 is also connected to the portion 21, is folded parallel to the tab 24, and ends with an edge 27 that is folded inwards, i.e., towards the face 21. The tab 26 forms, together with the portion 20, a second connecting terminal for the conducting wire 9. As shown more clearly by figure 1c, the spring-loaded contacts 18 and 19, once they have been inserted in the seats 16 and 17, are retained by undercuts 28 and 29 against which the edge 30 of the portion 20 and the edge 31 formed by the portion 21 with the tab 26 engage. In order to ensure better retention of the contacts 18 and 19 in the seats 16 and 17 on the side of the edge 31, a tooth 32 is formed in the portion 21 and is shaped so as to retract when the contact is inserted in the respective seat and to open outwards so as to lock on the undercut 29.

Two passages 33 and 34 are also provided in the body 14 to connect the spring-loaded contacts 18 and 19 to the two power supply wires 35 and 36.

Each passage 33 and 34 (see figure 1c) comprises a portion 37 that has a larger diameter and continues with a portion 38 that has a smaller diameter and leads into the seat 16 and 17 at the opening 25 of the contacts, tangent to the inner face of the portion 21.

The sheath 39 of the power supply wire is to be inserted hermetically in the larger-diameter portion 37 and the metallic lead 40 inside the sheath is to be inserted in a pressure-tight manner in the smaller-diameter portion 38.

Once the leads 40 of the power supply wires 35 and 36 have been inserted in the respective contacts 18 and 19, they are effectively retained by the front edge 24a of the tabs 24, which by biting into the leads 40 prevent their extraction.

At the same time, the leads 9 and 8 are retained between the portion 20 and the tab 26 of the contacts 16 and 17. However, the rounded edge 27 allows their extraction.

In normal operating conditions, the capacitor has the appearance shown in figure 1, in which the diaphragm 13 is folded towards the inside of the casing and the wires 35 and 36 are perfectly connected by the contacts 18 and 19 to the leads 8 and 9.

If a short circuit occurs and gas develops inside the capacitor, the internal pressure increases until the diaphragm 13 bends outwards and the leads 8 and 9 separate bfrom the contacts. This separation is in fact allowed because the leads 8 and 9 can slide between the portion 20 and the rounded edge 27. When the leads 8 and 9 separate, the supply of power to the capacitor ceases and the production of gas caused by the possible short circuit is therefore interrupted.

It is evident that the described invention perfectly achieves the intended aim. In particular, the power supply is no longer interrupted as in the prior art, by breaking the connection of the lead 8 or 9 to the heads 6 and 7 or by breaking the lead 8 and 9 at a weakened region, but by extracting the leads 8 and 9 from the connecting contacts, and therefore more reliably and precisely, since the separation of the contacts requires a lower internal pressure than required to produce fracture.

The described capacitor is susceptible of numerous modifications and variations, all of which are within the scope of the same inventive concept.

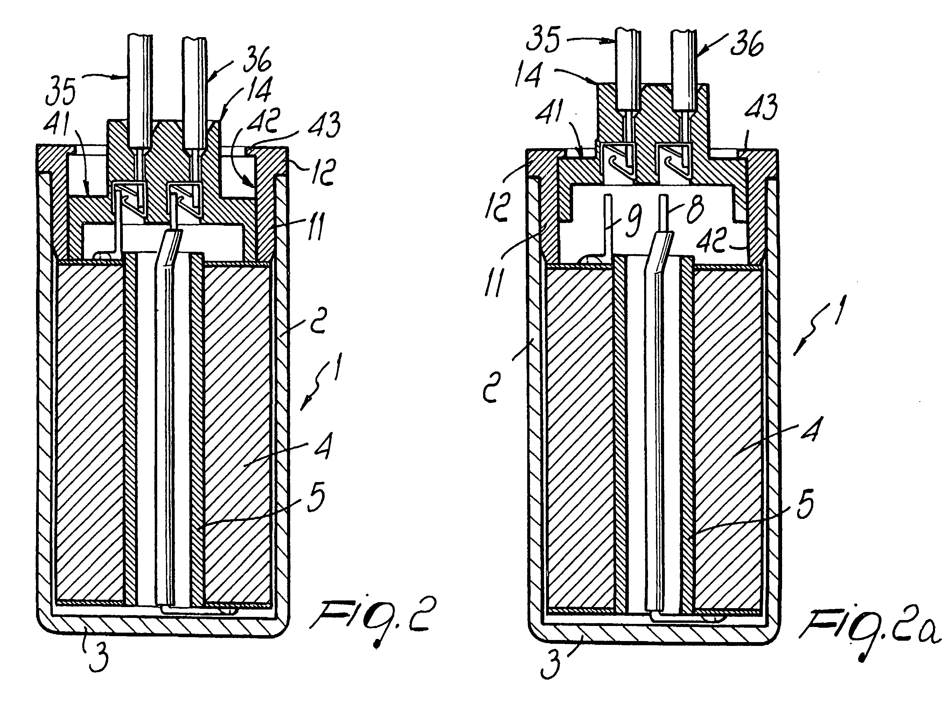

Figures 2 and 2a illustrate an embodiment in which the central body 14 is allowed to move by associating with said body a piston 41 that is slideable hermetically in a seat 42 of the ring 11 and is adapted to stop, in case of overpressure, against an internal step 43 of the collar 12.

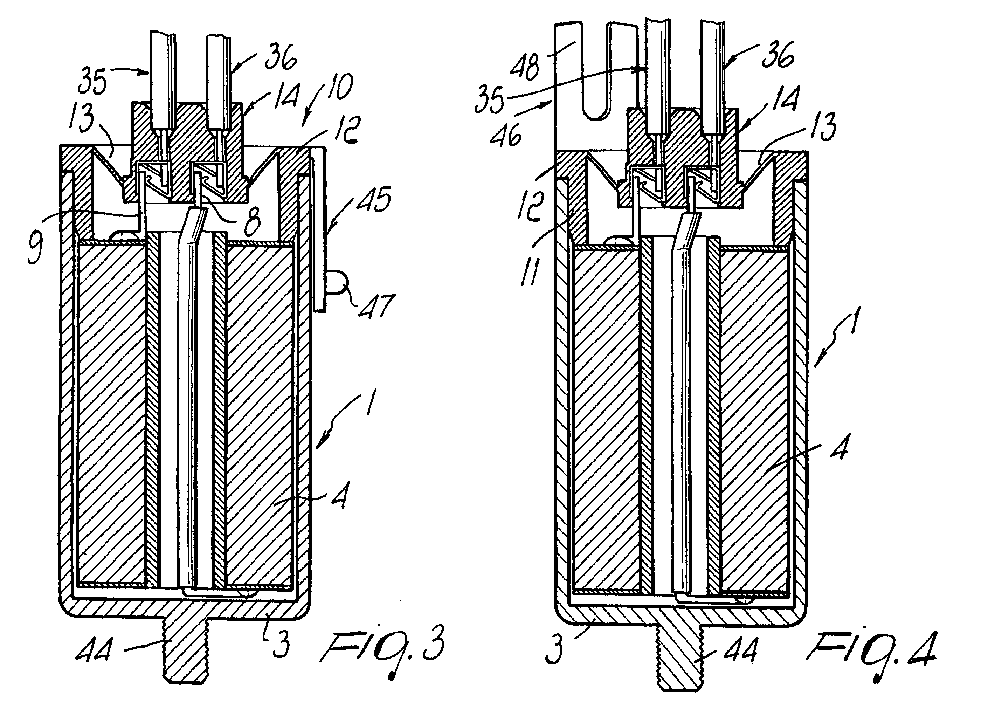

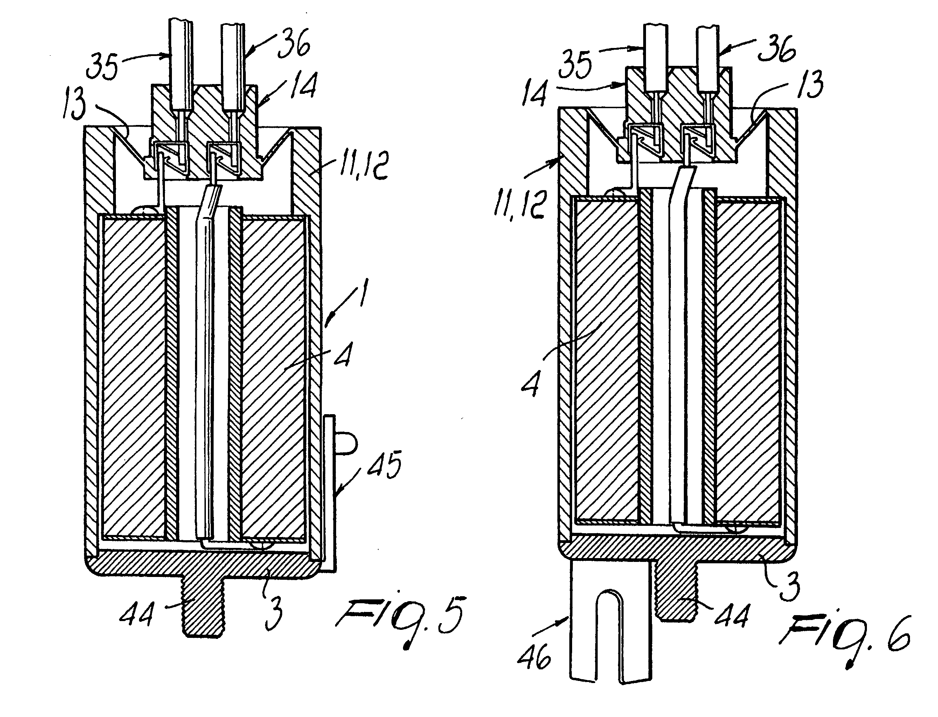

Figures 3 and 4 illustrate different possibilities of execution of the means through which the capacitor can be fixed to a support. In particular, in addition to a threaded tang 44 that protrudes from the bottom 3, there are provided brackets 45 and 46 that are rigidly coupled to the collar 12 and are shaped so as to have feet 47 for snap-together coupling or fork-like feet 48.

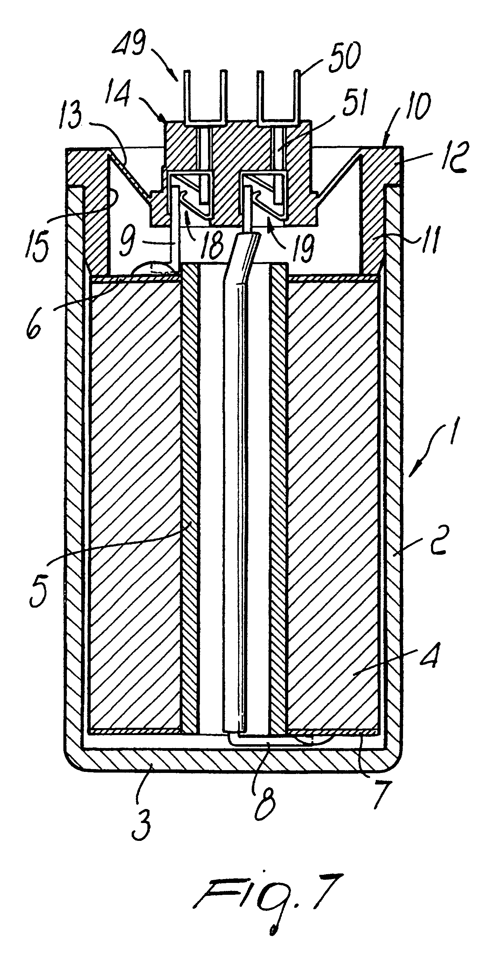

Figures 5 and 6 illustrate an embodiment in which the ring 11 and the collar 12 are monolithic with the cylindrical wall 2, whilst the base 3 is applied. In this case, the fixing brackets 45 and 46 are rigidly coupled to the base 3.

Finally, figure 7 illustrates an embodiment in which the connection to the spring-loaded contacts 18 and 19 is provided by means of connectors 49 having a terminal with blades 50 for connection to the power supply wires and a pin 51 that is inserted in a pressure-tight manner through the passages 33 and 34 of the central body for extraction-resistant insertion in the spring-loaded contacts 18 and 19.

It should be noted that if the capacitor is supplied without wires 35 and 36 or without connectors 49, the passages 33 and 34 in the body 14, in order to avoid the penetration of moisture inside the capacitor, are closed by diaphragms that are monolithic with the body 14 and can break when the leads 40 of the wires 35 and 36 are inserted in the passages 33 and 34.

Where technical features mentioned in any claim are followed by reference signs, those reference signs have been included for the sole purpose of increasing the intelligibility of the claims and accordingly such reference signs do not have any limiting effect on the interpretation of each element identified by way of example by such reference signs.

## Claims

1. A capacitor having an overpressure-controlled explosion-preventing device, composed of a casing (1), in which a capacitive element (4) made of self-healing metallized plastic film is accommodated, said capacitive element having two opposite heads (6, 7) whereon two leads (8, 9) are welded, and of a cover (10) made of plastics that contains an explosion-preventing device and comprises a central body (14) movable outwards when overpressure occurs in said casing (1), **characterized in that** at least one flexible spring-loaded contact (18, 19) of the "double quick coupling" type, made of conducting metal, is accommodated in said movable central body (14) and has a terminal (24, 21) that is adapted to hermetically receive a lead for connection to the power supply system inserted from the outside of the casing but not to allow its extraction, and a contact terminal (26, 20) towards the inside of the casing, which is adapted to receive a lead for connection to the capacitive element and to allow its extraction until electrical disconnection is achieved in case of overpressure.

2. A capacitor according to claim 1, **characterized in that** said spring-loaded contacts (18, 19) are accommodated in respective seats (16, 17) of said central body (14) and **in that** each one of said contacts is constituted by a lamina of conducting metal that is folded up so as to form a first portion (20) and a second portion (21) that are flat and parallel to each other and are connected at one edge by two bridges (22, 23) that delimit an opening (25) between them, a first tab (24) protruding between said bridges, having a sharp front edge, and being connected to a first one (20) of said portions at an acute angle, so as to form said extraction-preventing terminal together with the second one (21) of said portions, a second tab (26) being connected to the edge of said second portion (21) that lies opposite to the edge that connects the bridges (22, 23), said second tab being folded substantially parallel to said first tab (24) and having a rounded edge (27) so as to form said terminal that allows extraction.

3. A capacitor according to claim 2, **characterized in that** each one of the power supply wires (35, 36) of the capacitor is connected to said spring-loaded contact (18, 19) by a passage (33, 34) of said central body (14) that comprises an outer hole (37) having a larger diameter for the pressure-tight insertion of a sheath (39) of the wire (35, 36) and an inner hole (38) having a smaller diameter for the pressure-tight insertion of the metal lead (40) that lies inside the sheath, so that the seal is provided either on the larger-diameter hole (37) or on the smaller-diameter hole (38) or on both.

4. A capacitor according to claim 2, **characterized in that** said central body (14) has two passages (33, 34) for respective connectors (49) that comprise a pin (51) that is driven through said passage in a pressure-tight manner and is inserted in said extraction-preventing terminal (24, 21), a blade-fitted connecting terminal (50) for a respective power supply wire being rigidly coupled to said pin (51) outside said central body (14).

5. A capacitor according to claim 3, **characterized in that** said central body (14) is connected to said sheath by a conical diaphragm (13) that is adapted to close said casing hermetically.

6. A capacitor according to claim 1, **characterized in that** said central body (14) is rigidly coupled to a piston (41) that is guided hermetically in said casing (1).

7. A capacitor according to claim 1, **characterized in that** means (44, 45, 46) for coupling the capacitor to a support are rigidly coupled to said casing (1).

8. A capacitor according to claim 5, **characterized in that** said diaphragm (13) is rigidly coupled to a collar (12) of a ring (11) that is inserted and hermetically fixed in said casing (1).

9. A capacitor according to claim 6, **characterized in that** said piston (41) is guided in a ring (11) that is inserted and fixed hermetically in said casing (1).

10. A capacitor according to claim 8, **characterized in that** said collar (12) has an abutment (43) for positioning the capacitive element inside said casing (1).

11. A capacitor according to claim 2, **characterized in that** said seats (16, 17) have undercuts (28, 29) for retaining said spring-loaded contacts.

12. A capacitor according to claim 11, **characterized in that** said second portion (21) has a tooth (32) protruding outwards to engage one of said undercuts (28, 29).

13. A capacitor according to claim 3, **characterized in that** the passages (33, 34) in the central body (14) are closed by diaphragms that can break when the power supply wires (35, 36) are inserted therein.

## Patentansprüche

1. Elektrischer Kondensator mit einem überdruck-geregeltem Explosionsschutz bestehend aus:
- einem Gehäuse (1), in dem ein kapazitives Element (4) aus einem selbst heilenden metallisierten Kunststofffilm angeordnet ist, das zwei einander gegenüberliegende Köpfe (6, 7) besitzt, an die zwei Leiter (8, 9) angeschweisst sind, und
- einem Deckel (10) aus Kunststoff, der ein Explosionsschutz-Element und einen zentralen Körper (14) enthält, der nach aussen bewegbar ist, wenn in dem Gehäuse (1) Überdruck auftritt,
**dadurch gekennzeichnet, dass** mindestens ein flexibler federbelasteter Kontakt (18, 19) des "Doppelt-Schnell-Kupplungs"-Typs aus leitendem Metall in dem bewegbaren zentralen Körper (14) angeordnet ist, mit
- einer Anschlussklemme (24, 21), die geeignet ist, einen Anschlussleiter vom Stromversorgungssystem hermetisch aufzunehmen, der von ausserhalb des Gehäuses eingeführt wird, die aber nicht das Herausziehen des Leiters gestattet, und
- einer Anschlussklemme (26, 20) an der Innenseite des Gehäuses, die geeignet ist, einen Leiter zur Verbindung mit dem kapazitiven Element aufzunehmen, und im Überdrucksfall seine Entkopplung gestattet, bis die elektrische Verbindung unterbrochen ist.

2. Elektrischer Kondensator nach Anspruch 1 **dadurch gekennzeichnet, dass**
- die federbelasteten Kontakte (18, 19) in zugeordneten Sitzen (16, 17) des zentralen Körpers (14) angeordnet sind;
- jeder der Kontakte (16, 17) aus einer Lamelle aus einem leitenden Metall besteht, die so gebogen ist, dass ein erster Teil (20) und ein zweiter Teil (21) gebildet werden, die eben und parallel zueinander angeordnet und an einer Kante durch zwei Stege (22, 23) miteinander verbunden sind, die zwischen sich eine Öffnung (25) begrenzen;
- eine erste Zunge (24) zwischen die Stege (22, 23) ragt, die eine scharfe Frontkante (24a) besitzt und die mit dem ersten Teil (20) in einem spitzen Winkel derart verbunden ist, dass sie zusammen mit dem zweiten Teil (21) die Anschluss-Klemme (24, 21) bildet, die ein Herausziehen des Anschlussleiters verhindert;
- eine zweite Zunge (26), die mit der Kante des zweiten Teiles (21) verbunden ist, die der Kante gegenüber liegt, die mit den Stegen (22, 23) verbunden ist; und
- die zweite Zunge (26) weitgehend parallel zu der ersten Zunge (24) gebogen ist und eine runde Kante (27) besitzt, um die Anschlussklemme (26, 20) zu bilden, die ein Herausziehen des Leiters (8, 9) gestattet.

3. Elektrischer Kondensator nach Anspruch 2 **dadurch gekennzeichnet, dass**
- jeder der Anschlussleiter (35, 36) des Kondensators durch eine Öffnung (33, 34) des zentralen Körpers (14) mit dem federbelasteten Kontakt (18, 19) verbunden ist;
- die Öffnung (33, 34) des zentralen Körpers (14) eine äussere Bohrung (37) mit einem grossen Durchmesser zur druckdichten Einführung einer Hülle (39) des Anschlussleiters (35, 36) und eine innere Bohrung (38) mit einem kleinen Durchmesser zur druckdichten Einführung des innerhalb der Hülle (39) liegenden metallischen Leiters (40) besitzt; und
- die Dichtung entweder in der Bohrung (37) grossen Durchmessers oder in der Bohrung (38) kleinen Durchmessers oder in beiden erzielt wird.

4. Elektrischer Kondensator nach Anspruch 2 **dadurch gekennzeichnet, dass**
- der zentrale Körper (14) zwei Öffnungen (33, 34) für zugeordnete Stecker (49) mit einem Stift (51) besitzt, der in druckdichter Weise durch die Öffnung (33, 34) in die Anschlussklemmen (24, 21) eingeführt wird; und
- eine Flachsteckklemme (50) für einen zugeordneten Anschlussleiter (35, 36) ausserhalb des zentralen Körpers (14) mit dem Stift (51) fest verbunden ist.

5. Elektrischer Kondensator nach Anspruch 3 **dadurch gekennzeichnet, dass** der zentrale Körper (14) mit dem Deckel (10) durch ein konisches Diaphragma (13) verbunden ist, dass das Gehäuse (1) hermetisch abschliesst.

6. Elektrischer Kondensator nach Anspruch 1 **dadurch gekennzeichnet, dass** der zentrale Körper (14) fest mit einem Kolben (41) verbunden ist, der hermetisch in dem Gehäuse (1) geführt ist.

7. Elektrischer Kondensator nach Anspruch 1 **dadurch gekennzeichnet, dass** Befestigungselemente (44, 45, 46) zur Befestigung des Kondensators an einem Tragelement fest mit dem Gehäuse (1) verbunden sind.

8. Elektrischer Kondensator nach Anspruch 5 **dadurch gekennzeichnet, dass** das Diaphragma (13) fest mit einem Bund (12) eines Ringes (11) verbunden ist, der in das Gehäuse (1) eingesetzt und hermetisch mit dem Gehäuse (1) verbunden ist.

9. Elektrischer Kondensator nach Anspruch 6 **dadurch gekennzeichnet, dass** der Kolben (41) in einem Ring (11) geführt ist, der in das Gehäuse (1) eingesetzt und in dem Gehäuse (1) hermetisch fixiert ist.

10. Elektrischer Kondensator nach Anspruch 8 **dadurch gekennzeichnet, dass** der Bund (12) einen Anschlag (43) zur Positionierung des elektrischen Kondensatorelementes in dem Gehäuse (1) besitzt.

11. Elektrischer Kondensator nach Anspruch 2 **dadurch gekennzeichnet, dass** die Sitze (16, 17) Einschnitte (28, 29) zur Halterung der federbelasteten Kontakte (18, 19) besitzen.

12. Elektrischer Kondensator nach Anspruch 11 **dadurch gekennzeichnet, dass** der zweite Teil (21) einen Zahn (32) besitzt, der auswärts ragt, um mit einem der Einschnitte (28, 29) in Eingriff zu kommen.

13. Elektrischer Kondensator nach Anspruch 3 **dadurch gekennzeichnet, dass** die Öffnungen (33, 34) des zentralen Körpers (14) durch ein Diaphragma verschlossen sind, das brechen kann, wenn die Anschlussleiter (35, 36) darin eingeführt werden.

## Revendications

1. Condensateur ayant un dispositif anti-explosion commandé par surpression, composé d'une enveloppe (1) dans laquelle est logé un élément capacitif (4) fait d'un film plastique métallisé et auto-réparant, ledit élément capacitif ayant deux têtes opposées (6, 7) sur lesquelles sont soudés deux conducteurs (8, 9), et d'un couvercle (10) en matière plastique qui renferme un dispositif anti-explosion et comprend un corps central (14) mobile vers l'extérieur quand se produit une surpression dans ladite enveloppe (1), **caractérisé en ce qu'**au moins un contact à ressort à flexion (18, 19) du type « raccordement rapide double », fait d'un métal conducteur, est logé dans ledit corps central mobile (14) et a une borne (24, 21) qui est adaptée pour recevoir dans des conditions d'étanchéité un conducteur relié au système d'alimentation, inséré de l'extérieur de l'enveloppe, mais ne pas permettre son extraction, et une borne de contact (26, 20) vers l'intérieur de l'enveloppe, qui est adaptée pour recevoir un conducteur relié à l'élément capacitif et permettre son extraction jusqu'à ce que l'on arrive à une déconnexion électrique en cas de surpression.

2. Condensateur selon la revendication 1, **caractérisé en ce que** lesdits contacts à ressort (18, 19) sont logés respectivement dans des sièges (16, 17) dudit corps central (14) et **en ce que** chacun desdits contacts est constitué par une lamelle de métal conducteur qui est pliée de façon à former une première partie (20) et une deuxième partie (21) qui sont plates et parallèles entre elles et sont réunies d'un côté par deux ponts (22, 23) qui délimitent entre eux une ouverture (25), une première languette (24) dépassant entre lesdits ponts, ayant une arête frontale vive et étant reliée par un angle aigu à la première (20) desdites parties, de manière à former conjointement avec la seconde (21) desdites parties ladite borne anti-extraction, une seconde languette (26) étant reliée à l'arête de la deuxième partie (21) qui est opposée à l'arête qui relie les ponts (22, 23), ladite seconde languette étant pliée pour être sensiblement parallèle à ladite première languette (24) et ayant un bord arrondi (27) de façon à former ladite borne qui permet l'extraction.

3. Condensateur selon la revendication 2, **caractérisé en ce que** chacun des fils d'alimentation (35, 36) du condensateur est relié audit contact à ressort (18, 19) par un conduit (33, 34) dudit corps central (14) qui comprend un trou extérieur (37) ayant un plus gros diamètre pour l'insertion étanche de la gaine (39) du fil (35, 36) et un trou intérieur (38) ayant un plus petit diamètre pour l'insertion étanche du conducteur métallique (40) qui se trouve à l'intérieur de la gaine, de sorte que l'étanchéité est assurée soit sur le trou de plus gros diamètre (37), soit sur le trou de plus petit diamètre (38), soit sur les deux.

4. Condensateur selon la revendication 2, **caractérisé en ce que** ledit corps central (14) a deux conduits (33, 34) pour des connecteurs respectifs (49) qui comprennent une broche (51) qui est enfoncée dans ledit conduit de manière étanche et insérée dans ladite borne anti-extraction (24, 21), une borne équipée de lames (50) de raccordement au fil d'alimentation respectif étant assemblée de façon rigide à ladite broche (51) en dehors dudit corps central (14).

5. Condensateur selon la revendication 3, **caractérisé en ce que** ledit corps central (14) est relié à ladite enveloppe par un diaphragme conique (13) qui est adapté pour fermer hermétiquement ladite enveloppe.

6. Condensateur selon la revendication 1, **caractérisé en ce que** ledit corps central (14) est assemblé de façon rigide à un piston (41) dont la course dans ladite enveloppe (1) conserve son étanchéité.

7. Condensateur selon la revendication 1, **caractérisé en ce que** des moyens (44, 45, 46) de fixation du condensateur sur un support sont assemblés de façon rigide à ladite enveloppe (1).

8. Condensateur selon la revendication 5, **caractérisé en ce que** ledit diaphragme (13) est assemblé de façon rigide au collet (12) d'un anneau (11) qui est inséré dans ladite enveloppe (1) et fixé hermétiquement sur celle-ci.

9. Condensateur selon la revendication 6, **caractérisé en ce que** ledit piston (41) est guidé dans un anneau (11) qui est inséré et fixé hermétiquement dans ladite enveloppe (1).

10. Condensateur selon la revendication 8, **caractérisé en ce que** ledit collet (12) a une butée (43) pour positionner l'élément condensateur à l'intérieur de ladite enveloppe (1).

11. Condensateur selon la revendication 2, **caractérisé en ce que** lesdits sièges (16, 17) comportent des dégagements (28, 29) pour retenir lesdits contacts à ressort.

12. Condensateur selon la revendication 11, **caractérisé en ce que** la deuxième partie (21) comporte une dent (32) dépassant vers l'extérieur pour se bloquer sur un desdits dégagements (28, 29).

13. Condensateur selon la revendication 3, **caractérisé en ce que** les conduits (33, 34) du corps central (14) sont fermés par des opercules qui peuvent se briser quand on y introduit les fils d'alimentation (35, 36).
